# EUROPEAN PATENT APPLICATION

(11) **EP 3 089 468 A1**
(43) Date of publication of application: **02.11.2016**
(21) Application number: 14875829.5
(22) Date of filing: 12.12.2014
(51) Int. Cl.: H04N 21/472

(54) **SMART TELEVISION 3D SETTING INFORMATION PROCESSING METHOD AND DEVICE**

(30) Priority: 27.12.2013 CN 201310734626
(71) Applicant: LE Holdings (Beijing) Co., Ltd., Beijing 100025 (CN); Le Shi Zhi Xin Electronic Technology (Tianjin) Limited, Beijing 100025 (CN)
(72) Inventor: XIAO, Han, Beijing 100025 (CN); HUANG, Bo, Beijing 100025 (CN); HAN, Tingting, Beijing 100025 (CN); LIANG, Fan, Beijing 100025 (CN); LI, Qiang, Beijing 100025 (CN)
(74) Representative: Gosnall, Toby
(86) International application number: PCT/CN2014/093659
(87) International publication number: WO 2015/096626

(57) **Abstract**

Disclosed are a smart television 3D setting information processing method and device. Different applications in the smart television share the same global 3D setting function; a system global environment variable is preset in the global 3D setting function, and the behavior of the core display process of the operating system is modified, such that the core display process of the operating system polls the system global environment variable. The method comprising: when receiving a request for calling a 3D setting in a current application, presenting a 3D setting user interface; when receiving a selection result of a user through an operation entry in the 3D setting user interface, modifying the value of the system global environment variable according to the selection result; in the process of polling the system global environment variable by the core display process of the operating system, switching the play status of a video according to the change of the system global environment variable value. The present application can achieve global 3D setting.

## Description

### CROSS-REFERENCE TO RELATED APPLICATIONS

This application is based upon and claims priority to Chinese Patent Application No. 201310734626.0, titled "Smart Television 3D Setting Information Processing Method and Device", filed on December 27, 2013, the entire contents of which are incorporated herein by reference.

### FIELD OF TECHNOLOGY

The present disclosure relates to the technical field of 3D playing on a smart TV and particularly to a method and apparatus for processing 3D setting information in a smart TV.

### BACKGROUND

As Personal Computers (PCs) have become smart, and handsets and tablet computers also have become substantially smart, smart TVs also have been increasingly seen in our life as "high-definition", "network-enabled", and "smart" TVs.

The smart TV like the smart handset is provided with a fully open platform and works with an operating system, and a customer watching a normal TV program can install and uninstall by himself or herself an application, a game, and other program available from a TV manufacturer or a third-party service provider, where the function of the smart TV can be extended and upgraded constantly by the program; and the smart TV can be connected with the Internet, an AV device, a PC, etc., and provided with a program from the Internet, the AV device, the PC, etc., and present clearly the program desirable to the user on a TV screen via a simple, easy to use, and integrated operating interface.

While videos are being watched on the smart TV system, some video may be a 3D video, where a 3D video source generally includes two video files taken at angles between which there is some visual difference, which are synthesized, particularly left-right synthesized, and upper-lower synthesized, so that a 3D setting function will be provided for the user in an application to select particular one of the 3D synthesis modes, etc. However in the prior art, a predominant 3D setting switch is typically designed to be bound with a particular video player or another application, for example, a 3D setting function is bound with a signal source input interface, and another 3D setting function is bound with a multimedia player, where the two 3D setting functions are independent from each other. There are at least the following technical problems in the prior art: firstly there are a large number of operations repeated between the different 3D setting functions, so the same 3D setting function will be applicable to the different applications; secondly there are different user interface styles of the same 3D setting function in the different applications; thirdly there may be poor flexibility in that the 3D contents can only be watched using an application available from the system because it may be no 3D setting available to a third-party application installed by the user himself or herself.

### SUMMARY

An object of a method and apparatus for processing 3D setting information in a smart TV is to enable global 3D setting.

According to an aspect of embodiments of the present disclosure, there is provided a method for processing 3D setting information in a smart TV, wherein a same global 3D setting function is shared by different applications in the smart TV, a system-global environment variable is preset in the global 3D setting function, and a behavior of a core display process of an operating system is modified so that the core display process of the operating system polls the system-global environment variable; and the method includes:
presenting a 3D setting user interface upon reception of a 3D setting invocation request in a current application;
modifying the value of the system-global environment variable according to a selection result of a user upon reception of the selection result at an operation entry in the 3D setting user interface; and
switching, by the core display process of the operating system, a play state of a video in response to a changing value of the system-global environment variable while polling the system-global environment variable.

According to another aspect of embodiments of the present disclosure, there is provided a computer readable recording medium on which a program for performing the method above is recorded.

Optionally, the presenting the 3D setting user interface upon reception of the 3D setting invocation request in the current application includes:
receiving an invocation request for calling out 3D setting through a shortcut button on a control terminal, and presenting the 3D setting user interface, in the current application.

Optionally, the presenting the 3D setting user interface includes:
displaying the 3D setting user interface in the form of a window overlying a window where the current application resides.

Optionally, the switching, by the core display process of the operating system, the play state of the video in response to the changing value of the system-global environment variable while polling the system-global environment variable includes:
determining, by the core display process of the operating system, the number of video layers in a current system upon detecting the changing value of the system-global environment variable while polling the system-global environment variable; and
if there is only one video layer in the current system, then switching the play state of the video being played at the video layer.

Optionally, the method further includes:
detecting, by the core display process of the operating system, a behavior of exiting the current application; and
switching the play state of the video from a 3D state to a 2D state if the behavior of exiting the current application is detected.

According to another aspect of embodiments of the present disclosure, there is provided an apparatus for processing 3D setting information in a smart TV, wherein a same global 3D setting function is shared by different applications in the smart TV, a system-global environment variable is preset in the global 3D setting function, and a behavior of a core display process of an operating system is modified so that the core display process of the operating system polls the system-global environment variable; and the apparatus includes:
an interface presenting module configured to present a 3D setting user interface upon reception of a 3D setting invocation request in a current application;
a variable modifying module configured to modify the value of the system-global environment variable according to a selection result of a user upon reception of the selection result at an operation entry in the 3D setting user interface; and
a responding module configured for the core display process of the operating system to switch a play state of a video in response to a changing value of the system-global environment variable while polling the system-global environment variable.

Optionally, the interface presenting module is configured:
to receive an invocation request for calling out 3D setting through a shortcut button on a control terminal, and to present the 3D setting user interface, in the current application.

Optionally, the interface presenting module is configured:
to display the 3D setting user interface in the form of a window overlying a window where the current application resides.

Optionally, the responding module includes:
a number of video layers determining module configured to determine the number of video layers in a current system if the core display process of the operating system detects the changing value of the system-global environment variable while polling the system-global environment variable; and
a switching module configured to switch the play state of the video being played at a video layer in the current system if there is only the video layer.

Optionally, the apparatus further includes:
a detecting module configured for the core display process of the operating system to detect a behavior of exiting the current application; and
a state switching module configured to switch the play state of the video from a 3D state to a 2D state when the behavior of exiting the current application is detected.

In the embodiments of the disclosure, a system-global environment variable can be preset, and the behavior of the core display process of the system can be modified, so that the core display process can poll the system-global environment variable, and switch the play state of the video upon detecting the changing value of the environment variable, to thereby enable the operating system to support global 3D setting. Furthermore the same global 3D setting interface can be called out directly in different applications, the global environment variable can be modified in response to the selection result of the user, and the core display process of the system can switch the play state of the video after reading the modified value of the variable. Thus in this way, a response can be made to the selection operation by the user through the same 3D setting function in the different applications, where the user interface is uniform, and the 3D setting function can be shared by both a system-level application and a third-party application instead of being performed separately for them, thus avoiding the operations from being repeated.

### BRIEF DESCRIPTION OF THE DRAWINGS

Various other advantages and benefits of the disclosure will become apparent to those ordinarily skilled in the art upon review of the following detailed description of preferred embodiments thereof. The drawings are merely intended to illustrate the preferred embodiments of the disclosure but not intended to limit the disclosure. Like reference numerals will denote like components throughout the drawings in which:
Fig.1 is a flow chart of a method for processing 3D setting information in a smart TV according to an embodiment of the disclosure; and
Fig.2 is a schematic diagram of an apparatus for processing 3D setting information in a smart TV according to an embodiment of the disclosure.

### DESCRIPTION OF THE EMBODIMENTS

In order to make the objects, features and advantages above of the disclosure more apparent and readily understood, the disclosure will be described below in further details with reference to the drawings and particular embodiments thereof.

In the embodiments of the disclosure, in order to make up the drawbacks in the prior art, a global 3D setting function can be provided in a smart TV system as a separate application or as a function integrated in a system setting application. While another application is playing a video, if 3D setting is required to be made, then the application can interface with the global 3D setting function. That is, in the embodiments of the disclosure, 3D setting can also be made like imaging setting, sound setting, etc., as a kind of global setting, so that an interface of the 3D setting function can be called out by a shortcut button on a control device in any application including a system inbuilt application and a third-party application.

It shall be noted that in the prior art, 3D setting is not made globally but made separately in the respective applications, primary because the existing operating system supports only global image setting and global sound setting, but does not support such global 3D setting. In view of this, in the embodiments of the disclosure, in order to enable such global 3D setting, firstly the operating system can support it. Particularly firstly a system-global environment variable can be set, and a behavior of a core display process of the operating system can be modified to poll constantly the system-global environment variable, and to respond to a changing value of the environment variable so as to switch a video play state, for example, from 2D to 3D, from left-right synthesized 3D to upper-lower synthesized 3D, etc.

With the underlying improvement above, global 3D setting can be invoked in a particular application to switch the video play state. Particular embodiments of the disclosure will be described below in details.

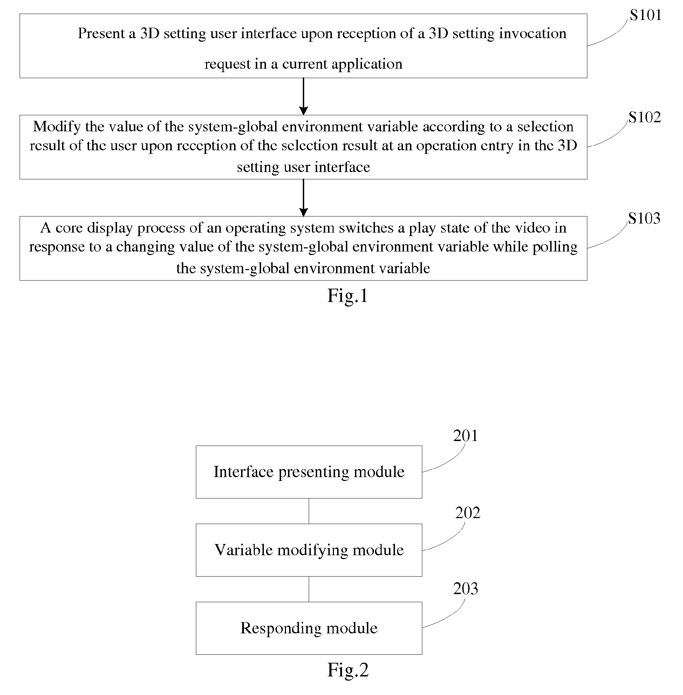

Referring to Fig.1, an embodiment of the disclosure firstly provides a method for processing 3D setting information in a smart TV, where the method can include the following steps:
The step S101 is to present a 3D setting user interface upon reception of a 3D setting invocation request in a current application;

In a particular implementation, generally a user watching some video in an application will invoke the 3D setting function to switch a play state of the video, for example, from 2D to 3D, from left-right synthesized 3D to upper-lower synthesized 3D, etc. In order for the user to invoke the 3D setting function conveniently, a shortcut button can be preset, for example, a button labeled as "3D Setting", etc., can be displayed, on a control device (e.g., a remote controller, etc.), so that the user can call out a user interface of global 3D setting using the shortcut button. Alternatively if the global 3D setting function is integrated in a system setting application, then firstly an interface of the system setting application can be called out using the shortcut button, and then an entry to global 3D setting can be located in the interface, clicked on, etc., to thereby call out the user interface of global 3D setting.

Here the user interface of 3D setting can be presented particularly by displaying the user interface of 3D setting overlying a window where the current application resides. That is, it can be presented particularly like interfaces of image setting, sound setting, etc. Moreover in reality, after 3D setting is globalized above, 3D setting can become a function at the same level as image setting, sound setting, etc., so that the user can invoke the 3D setting function in any application in a uniform user interface.

The step S102 is to modify the value of the system-global environment variable according to a selection result of the user upon reception of the selection result at an operation entry in the 3D setting user interface;

There are generally a number of options in the user interface of 3D setting, and the user can select one of the options to determine a play state at which the current video will be played, where an option corresponding to the current play state of the video is selected by default. For example, before 3D setting is made, the video may be being played in the form of 2D, and at this time, after the user interface of global 3D setting is called out, the "2D" option in the user interface is selected. Thereafter if the user needs to switch to the 3D state, then the user can move an operation focus to the option corresponding to 3D in the user interface of 3D setting, and then confirm it, etc., to thereby issue an instruction to select the option. Correspondingly the global 3D setting function can modify a previously preset value of the system-global environment variable upon reception of the selection result of the user.

Here the value of the system-global environment variable can be an Enumerated value, and a correspondence relationship between the respective values and the respective play states can be well defined in advance. For example, the environment variable can take the values of 0, 1, 2, and 3, where "0" represents the 2D state, "1" represents the left-right synthesized 3D state, "2" represents the upper-lower synthesized 3D state, "3" represents another state, etc. If some video is currently in the 2D play state, then the value of the environment variable will be 0, and if the user decides to switch to the left-right synthesized 3D state, then the value of the environment variable will be modified to 1, or if the user decides to switch to the upper-lower synthesized 3D state, then the value of the environment variable will be modified to 2, etc.

In the step S103, a core display process of an operating system switches a play state of the video in response to a changing value of the system-global environment variable while polling the system-global environment variable.

Since the behavior of the core display process of the operating system has been modified to poll constantly the system-global environment variable at some interval of time, after the value of the system-global environment variable is modified, the core display process of the operating system can know the changing value, and further switch the play state of the video according to the pre-defined correspondence relationship between the values and the play states. For example, if the value of the environment variable is detected changing from "0" to "1", then the play state of the video will be switched to the upper-lower synthesized 3D state as predefined, etc., where details about how to switch the play state go beyond the scope of the embodiments of the disclosure, so a detailed description thereof will be omitted here.

It shall be noted that in a real application, in an embodiment of the disclosure, since global 3D setting is provided, it will mean that the user can invoke and set it in any interface, but in reality, it may not be appropriate or necessary to switch the play state in all the scenarios, and only if there is only one video layer, a response will be made to the 3D setting operation by the user. That is, only if the user is watching some video in a normal mode in the current application, the play state of the video will be switched; otherwise, if the user does not watch any video (the number of video layers is 0), or is watching the video in the form of a picture in picture (the number of video layers is plural), then the video will not be switched from the 2D state to the 3D state, or will be switched uselessly. Thus in a real application, the core display process of the operating system can further determine the number of video layers while reading the environment variable, and will respond to the setting operation by the user only if the number of video layers is equal to 1; otherwise, the core display process will not respond even if the user makes setting in the user interface. Stated otherwise, the core display process of the operating system polling the system-global environment variable will firstly determine the number of video layers in the current system upon detecting the changing value of the system-global environment variable, and if there is only one video layer in the current system, then the core display process will switch the play state of the video being played at the video layer; otherwise, the core display process will not respond, where the core display process at the core layer of the system can obtain information about the number of video layers.

Moreover in a real application, the user may switch the play state from 2D to 3D while the video is being played, and the process will exit the player directly upon completion of playing, that is, the number of video layers will be decreased from 1 to 0, so in this situation, the core display process of the system can also operate to switch automatically the state of the video from the 3D state to the 2D state. That is, the core display process of the operating system can detect a behavior of exiting the current application, and switch the play state of the video from the 3D state to the 2D state upon detecting the behavior of exiting the current application, where the play state can alternatively be switched particularly by firstly modifying the system-global environment variable and then switching the state according to the value of the modified variable.

Generally in the embodiment of the disclosure, a system-global environment variable can be preset, and the behavior of the core display process of the system can be modified, so that the core display process can poll the system-global environment variable, and switch the play state of the video upon detecting the changing value of the environment variable, to thereby enable the operating system to support global 3D setting. Furthermore the same global 3D setting interface can be called out directly in different applications, the global environment variable can be modified in response to the selection result of the user, and the core display process of the system can switch the play state of the video after reading the modified value of the variable. Thus in this way, a response can be made to the selection operation by the user through the same 3D setting function in the different applications, where the user interface is uniform, and the 3D setting function can be shared by both a system-level application and a third-party application instead of being performed separately for them, thus avoiding the operations from being repeated.

An embodiment of the disclosure further discloses a computer readable recording medium on which a program for performing the method above is recorded. The computer readable recording medium includes any mechanism configured to store or transport computer (just as an example) readable information. For example the machine readable medium includes a Read Only Memory (ROM), a Random Access Memory (RAM), a magnetic disk storage medium, an optical storage medium, a flash memory medium, an electric, optical, acoustic or another form of propagated signal (e.g., a carrier wave, an infrared signal, a digital signal, etc.), etc.

In correspondence to the method for processing 3D setting information in a smart TV according to an embodiment of the disclosure, an embodiment of the disclosure further provides an apparatus for processing 3D setting information in a smart TV, where the same global 3D setting function is shared by different applications in the smart TV, and a system-global environment variable is preset in the global 3D setting function and polled by a core display process of an operating system, and referring to Fig.2, the apparatus includes:
An interface presenting module 201 is configured to present a 3D setting user interface upon reception of a 3D setting invocation request in a current application;
A variable modifying module 202 is configured to modify the value of the system-global environment variable according to a selection result of a user upon reception of the selection result at an operation entry in the 3D setting user interface; and
A responding module 203 is configured for the core display process of the operating system to switch a play state of a video in response to a changing value of the system-global environment variable while polling the system-global environment variable.

Here the interface presenting module 201 can be particularly configured:
to receive an invocation request for calling out 3D setting through a shortcut button on a control terminal, and to present the 3D setting user interface, in the current application.

The interface presenting module 201 can be particularly configured:
to display the 3D setting user interface in the form of a window overlying a window where the current application resides.

In a real application, the core display process of the system can further determine the number of video layers while reading the environment variable, and will respond to the setting operation by the user only if the number of video layers is equal to 1; otherwise, the core display process will not respond even if the user makes setting in the user interface. At this time the responding module 203 can particularly include:
a number of video layers determining module is configured to determine the number of video layers in the current system if the core display process of the operating system detects the changing value of the system-global environment variable while polling the system-global environment variable; and
a switching module is configured to switch the play state of the video being played at a video layer in the current system if there is only the video layer.

Moreover the user may switch the play state from 2D to 3D while the video is being played, and the process will exit a player directly upon completion of playing, that is, the number of video layers will be decreased from 1 to 0, so in this situation, the core display process of the system can also operate to switch automatically the state of the video from the 3D state to the 2D state. At this time, the apparatus can further include:
a detecting module is configured for the core display process of the operating system to detect a behavior of exiting the current application; and
a state switching module is configured to switch the play state of the video from the 3D state to the 2D state if the behavior of exiting the current application is detected.

In the embodiment of the disclosure, a system-global environment variable can be preset, and the behavior of the core display process of the system can be modified, so that the core display process can poll the system-global environment variable, and switch the play state of the video upon detecting the changing value of the environment variable, to thereby enable the operating system to support global 3D setting. Furthermore the same global 3D setting interface can be called out directly in different applications, the global environment variable can be modified in response to the selection result of the user, and the core display process of the system can switch the play state of the video after reading the modified value of the variable. Thus in this way, a response can be made to the selection operation by the user through the same 3D setting function in the different applications, where the user interface is uniform, and the 3D setting function can be shared by both a system-level application and a third-party application instead of being performed separately for them, thus avoiding the operations from being repeated.

For the sake of conciseness, the respective embodiments of the method above have been described as a series of actions in combination, but those skilled in the art shall appreciate that the disclosure will not be limited to the described order of the actions because some of the steps can be performed in another order or concurrently without departing from the spirit of the disclosure; and secondly those skilled in the art shall also appreciate that the respective embodiments of the method above are preferred embodiments, and the actions and the modules involved in the respective embodiments may not be necessary to the disclosure.

For the sake of a concise description, the embodiments of the apparatus have been described as a series of modules in combination, but those skilled in the art shall appreciate that the disclosure will not be limited to the described combination of modules because some of the modules can be substituted by other modules according to the disclosure; and secondly those skilled in the art shall also appreciate that all the embodiments of the apparatus above are preferred embodiments, but all the modules involved in the embodiments may not be necessary to the embodiments of the disclosure.

The respective embodiments in the description have been described progressively, and each of the embodiments has been focused on its differences from the other embodiments, and the description of their commonalities can be applied tp each other. Since the embodiments of the apparatus are substantially similar to the embodiments of the method, the embodiments of the apparatus have been described in brief, and for details thereof, reference can be made to the description of the embodiments of the method.

The method and apparatus for processing 3D setting information in a smart TV according to the embodiments of the disclosure have been described above in details, and the principle of the disclosure and the embodiments thereof have been set forth in this context by way of several examples, but the embodiments above have been described only for the purpose of facilitating understanding of the method of the disclosure and the core idea thereof; and moreover those ordinarily skilled in the art can modify the embodiments and application scopes of the disclosure without departing from the spirit of the disclosure, and in summary the disclosure of the disclosure will not be construed as limiting the disclosure.

## Claims

1. A method for processing 3D setting information in a smart TV, wherein a same global 3D setting function is shared by different applications in the smart TV, a system-global environment variable is preset in the global 3D setting function, and a behavior of a core display process of an operating system is modified so that the core display process of the operating system polls the system-global environment variable; and the method comprises:
presenting a 3D setting user interface upon reception of a 3D setting invocation request in a current application;
modifying the value of the system-global environment variable according to a selection result of a user upon reception of the selection result at an operation entry in the 3D setting user interface; and
switching, by the core display process of the operating system, a play state of a video in response to a changing value of the system-global environment variable while polling the system-global environment variable.

2. The method for processing 3D setting information in a smart TV according to claim 1, wherein the presenting the 3D setting user interface upon reception of the 3D setting invocation request in the current application comprises:
receiving an invocation request for calling out 3D setting through a shortcut button on a control terminal, and presenting the 3D setting user interface, in the current application.

3. The method for processing 3D setting information in a smart TV according to claim 1, wherein the presenting the 3D setting user interface comprises:
displaying the 3D setting user interface in the form of a window overlying a window where the current application resides.

4. The method for processing 3D setting information in a smart TV according to claim 1, wherein the switching, by the core display process of the operating system, the play state of the video in response to the changing value of the system-global environment variable while polling the system-global environment variable comprises:
determining, by the core display process of the operating system, the number of video layers in a current system upon detecting the changing value of the system-global environment variable while polling the system-global environment variable; and
if there is only one video layer in the current system, then switching the play state of the video being played at the video layer.

5. The method for processing 3D setting information in a smart TV according to claim 1, further comprising:
detecting, by the core display process of the operating system, a behavior of exiting the current application; and
switching the play state of the video from a 3D state to a 2D state if the behavior of exiting the current application is detected.

6. An apparatus for processing 3D setting information in a smart TV, wherein a same global 3D setting function is shared by different applications in the smart TV, a system-global environment variable is preset in the global 3D setting function, and a behavior of a core display process of an operating system is modified so that the core display process of the operating system polls the system-global environment variable; and the apparatus comprises:
an interface presenting module configured to present a 3D setting user interface upon reception of a 3D setting invocation request in a current application;
a variable modifying module configured to modify the value of the system-global environment variable according to a selection result of a user upon reception of the selection result at an operation entry in the 3D setting user interface; and
a responding module configured for the core display process of the operating system to switch a play state of a video in response to a changing value of the system-global environment variable while polling the system-global environment variable.

7. The apparatus for processing 3D setting information in a smart TV according to claim 6, wherein the interface presenting module is configured:
to receive an invocation request for calling out 3D setting through a shortcut button on a control terminal, and to present the 3D setting user interface, in the current application.

8. The apparatus for processing 3D setting information in a smart TV according to claim 6, wherein the interface presenting module is configured:
to display the 3D setting user interface in the form of a window overlying a window where the current application resides.

9. The apparatus for processing 3D setting information in a smart TV according to claim 6, wherein the responding module comprises:
a number of video layers determining module configured to determine the number of video layers in a current system if the core display process of the operating system detects the changing value of the system-global environment variable while polling the system-global environment variable; and
a switching module configured to switch the play state of the video being played at a video layer in the current system if there is only the video layer.

10. The apparatus for processing 3D setting information in a smart TV according to claim 6, further comprising:
a detecting module configured for the core display process of the operating system to detect a behavior of exiting the current application; and
a state switching module configured to switch the play state of the video from a 3D state to a 2D state when the behavior of exiting the current application is detected.

11. A computer readable recording medium, on which a program for performing a method according to claim 1 is recorded.
